# EUROPEAN PATENT APPLICATION

(11) **EP 2 631 475 A1**
(43) Date of publication of application: **28.08.2013**
(21) Application number: 12156719.2
(22) Date of filing: 23.02.2012
(51) Int. Cl.: F03D 11/00, F03D 7/04

(54) **Method to improve the optical visibility of a wind farm**

(71) Applicant: Siemens Aktiengesellschaft, 80333 München (DE)
(72) Inventor: Pedersen, Henrik, 7400 Herning (DK)

(57) **Abstract**

The invention relates to a method to improve the optical visibility of a wind farm (WF). Warning lights are arranged and prepared for warning purposes of the wind farm. These warning lights are rotated by the rotors of a first wind turbine and of at least a second wind turbine of the wind farm. The wind speed (WS) of the incoming wind at the wind farm (WF) is measured. The wind speed (WS) is compared with a predefined wind speed. The first wind turbine (WT1) of the wind farm (WF) is turned from operational mode into idle mode if the measured wind speed (WS) is below the predefined wind speed. The rotor angle (RA1) of the first wind turbine (WT1), which is in idle mode, is saved as first rotor angle (RA1). The first rotor angle (RA1) is communicated to the at least second wind turbine (WT2) of the wind farm (WF), which is in idle mode. The rotor angle (RA1) of the second wind turbine (WT2) is adjusted to the first rotor angle (RA1), and is kept by the second wind turbine (WT2), which is in idle mode.

## Description

The invention relates to a method to improve the optical visibility of a wind farm.

An individual wind turbine of a wind farm stops the production of electrical energy, if the wind speed at the site of this wind turbine falls below a predetermined wind speed. This is known as standby-mode or idle mode of the wind turbine.

The wind speed is measured by meteorological instruments, which are preferably arranged at the top of the nacelle of the wind turbine.

The rotor of the wind turbine, which is in idle mode, shows a specific rotor angle when the wind speed is below the predetermined wind speed.

The rotor angle defines the orientation of the blades in relation to a vertical plane. For example the first blade of the wind turbine may be oriented vertically pointing to the ground, while the second and the third blade of the wind turbine may be oriented in a ±120° angle (counted clockwise and counter-clockwise) in relation to the first blade.

Wind farms are quite large thus the wind speed is different at the different wind turbine sites. Thus the rotors of the wind turbines of the wind farm will show individual and different rotor angles, when the wind turbines are in their idle-mode.

Wind turbines show aerial warning lights at the tip-ends of the blades. These lights are used to warn ships, helicopters or planes, when they are approaching a wind farm.

If the rotor angles are different as described above the location and the dimension of the wind farm will be represented by a mere diffuse and non-focused number of warning lights.

Thus the optical visibility of the wind farm for ships, helicopters or planes might not be efficient enough.

It is therefore the aim of the invention to provide an improved optical visibility of a wind farm, if wind turbines of the wind farm are in idle mode.

This aim is reached by the features of claim 1.

Preferred configurations of the invention are addressed by the dependent claims.

According to the method invented warning lights are arranged and prepared for warning purposes of the wind farm. These warning lights are rotated by the rotors of a first wind turbine and of at least a second wind turbine of the wind farm. The wind speed of the incoming wind at the wind farm is measured. The wind speed is compared with a predefined wind speed. The first wind turbine of the wind farm is turned from operational mode into idle mode if the measured wind speed is below the predefined wind speed. The rotor angle of the first wind turbine, which is in idle mode, is saved as first rotor angle. The first rotor angle is communicated to the at least second wind turbine of the wind farm, which is in idle mode. The rotor angle of the second wind turbine is adjusted to the first rotor angle, and is kept by the second wind turbine, which is in idle mode.

The first rotor angle is kept by the nacelle of the second wind turbine while it is in idle mode.

As a final result all rotors of the wind turbines of the wind farm, which are in idle mode, will show the same rotor angle. Preferably the wind turbines of the wind farm show the warning lights at the tip-ends of the blades of the wind turbine rotors.

In a preferred configuration the incoming wind is measured at the site of the first wind turbine.

Preferably the wind speed is measured by a meteorological instrument.

Preferably the meteorological instrument is arranged at the top of the nacelle of the wind turbine.

In another preferred configuration the incoming wind is measured using a meteorological mast, which is preferably close to the site of the first wind turbine or which is arranged close to the wind farm.

In a preferred configuration the first rotor angle is saved by a server, which is used to control the wind farm. The server even might be used to store relevant parameters of the wind farm and/or to store and evaluate wind turbine measurements.

Preferably the server communicates the first rotor angle to the at least second wind turbine or even to all remaining wind turbines of the wind farm.

In another preferred configuration the first rotor angle is saved at the first wind turbine and is communicated from the first wind turbine to the second wind turbine or to all remaining wind turbines of the wind farm.

In a preferred configuration the pitch angle of the blades of the first wind turbine is saved when the first wind turbine is turned from operational mode into idle mode. The pitch angle of the first wind turbine is saved as first pitch angle. The first pitch angle is communicated to at least a second wind turbine of the wind farm, which is in idle mode.

The pitch angle of the blades of the second wind turbine is adjusted to this first pitch angel.

Thus all wind turbines of a wind farm, which are in idle mode, additionally show the same blade pitch angel.

In another preferred configuration the yaw angle of the nacelle of the first wind turbine is saved when the first wind turbine is turned from operational mode into idle mode.

The yaw angle defines the orientation of the nacelle in relation to a geographical direction.

The yaw angle of the nacelle of the first wind turbine is saved as first yaw angle. The first yaw angle is communicated to at least a second wind turbine of the wind farm, which is in idle mode. The yaw angle of the nacelle of the second wind turbine is adjusted to this first yaw angel.

Thus all wind turbines of the wind farm, which are in idle mode, additionally show the same yaw angel.

A function is used for the alignment-procedure as discussed above. The function is preferably implemented at the server of the wind farm.

Preferably the function monitors the yaw direction and/or the pitch angle and/or the rotor angle of all wind turbines of the wind farm and preferably calculates mean values of those parameters. These mean values are used for the alignment of the wind turbines.

The method-steps as claimed are initiated if the measured wind speed is beneath the predefined wind speed for a given period of time.

The method invented results even in a high aesthetic level as the rotors of the wind turbines of the wind farm are aligned in the same direction or orientation.

The method invented results in aligned rotor angles of all wind turbines of the wind farm, which are in idle mode. The warning lights of the whole wind farm are aligned in their angle and height thus they appear in a regular manner. Thus the optical detection and thus the visibility of the wind farm are enhanced.

If the rotor angles and preferably the yaw angles of all wind turbines are aligned even the radar-detection of the wind farm will be improved. Radar-scatters will be reduced thus ships, helicopters and planes will detect the wind farm in an improved manner, at least if they are approaching the wind farm from certain directions.

The invention is shown in more detail by help of a figure.
- FIG 1: shows wind turbines of a wind farm, which are in operational mode,
- FIG 2: shows wind turbines of the same wind farm, while the wind turbines are in idle mode and the rotor angles of theses wind turbines are aligned according to the invention, and
- FIG 3: shows wind turbines of another wind farm, while the wind turbines are in idle mode and while the nacelles of theses wind turbines are aligned additionally.

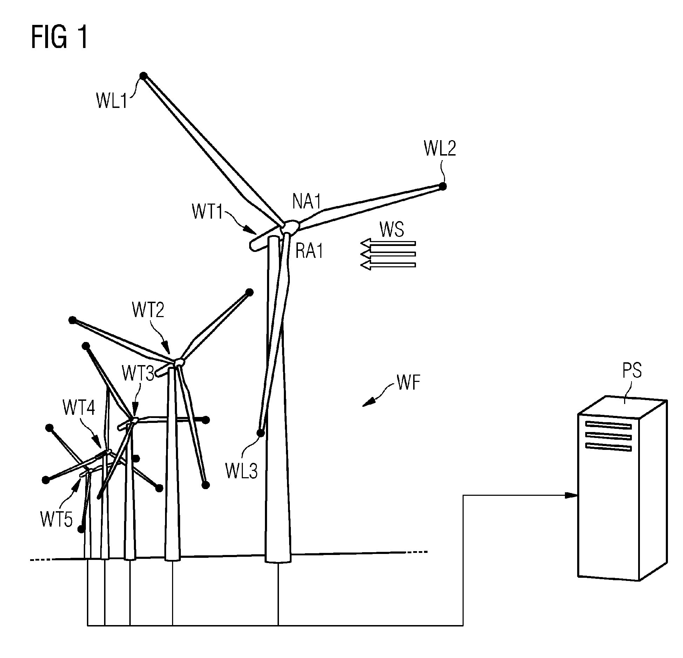

FIG 1 shows five wind turbines WT1 to WT5 of a wind farm WF, while each wind turbine WT1 to WT5 of the wind farm WF is in operational mode.

Each of the wind turbines WT1 to WT5 show warning lights WL1 to WL3, which are arranged at the tip end of the blades or which are arranged close to the tip end of the blades.

The wind speed WS of the incoming wind is measured at the first wind turbine WT1 for example.

The measured wind speed WS is compared with a predefined wind speed.

If the measured wind speed WS falls below or is below the predefined wind speed the first wind turbine WT1 of the wind farm WF is turned from operational mode into idle mode.

The rotor angle RA1, which is connected to the nacelle NA1 of the first wind turbine WT1, is saved as first rotor angle RA1. For this purpose a park server PS of the wind farm WF is used.

The first rotor angle RA1 is communicated to the remaining wind turbines WT2 to WT5 of the wind farm. For this purpose the park server PS of the wind farm is used, too.

The rotor angles of the other wind turbines WT2 to WT5 are adjusted to this first rotor angel RA1, when the other wind turbines WT2 to WT5 are in idle mode.

As a result all rotors of the wind turbines WT1 to WT5 of the wind farm are aligned, thus the blades are oriented in the same direction.

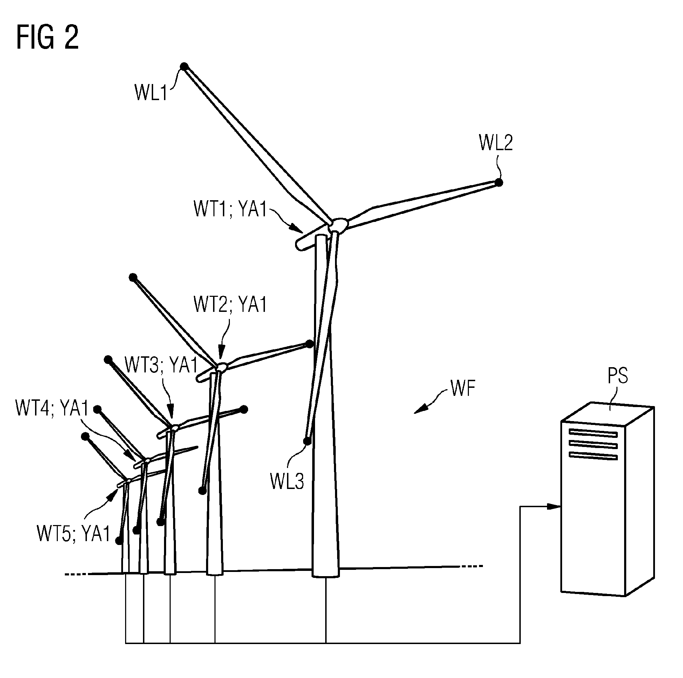

This is shown in FIG 2. All warning lights WL1 - WL3 of the wind turbines WT1 to WT5 can be grouped optically.

A first group and a second group of warning lights point upwards, which are referred by the warning lights WL1 and WL2.

A third group of warning lights point downwards, which is referred by the warning lights WL3.

The nacelles of the wind turbines WT1 to WT5 additionally show aligned yaw angles YA1 to YA5. Thus the nacelles are even aligned in the same geographical direction.

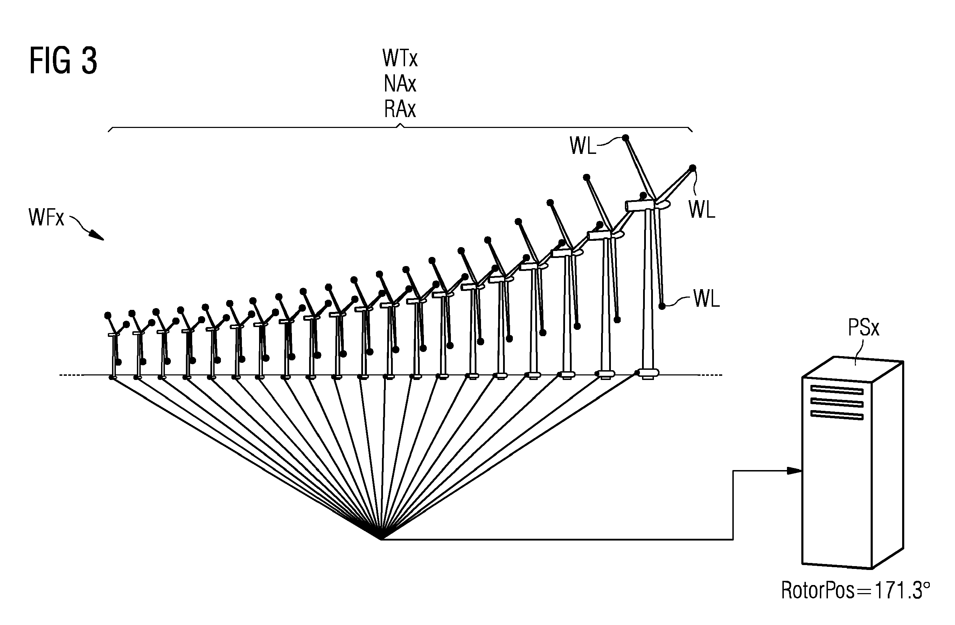

FIG 3 shows wind turbines WTx of another wind farm WFx. The wind turbines WTx are in idle mode.

All nacelles NAx of the wind turbines WTx are aligned by their yaw angles, thus all nacelles NAx are aligned to a certain direction.

Additionally the rotor angles RAx of the wind turbines WTx are aligned. In this example a first blade of the rotor of all wind turbines WTx is pointing towards the ground while the remaining blades are pointing in a ±120°-direction in relation to the first blade.

As a result all wind turbines WTx show the same rotor angle RAx. For this alignment a park server PSx of the wind farm WFx may be used.

As described in FIG 2 the warning lights WL are grouped optically. Thus the visibility of the wind farm by the grouped warning lights is improved.

## Claims

1. Method to improve the optical visibility of a wind farm (WF),
- wherein warning lights, which are arranged and prepared for warning purposes of the wind farm, are rotated by the rotors of a first wind turbine and of at least a second wind turbine of the wind farm,
- wherein the wind speed (WS) of the incoming wind at the wind farm (WF) is measured,
- wherein the wind speed (WS) is compared with a predefined wind speed,
- wherein the first wind turbine (WT1) of the wind farm (WF) is turned from operational mode into idle mode if the measured wind speed (WS) is below the predefined wind speed,
- wherein the rotor angle (RA1) of the first wind turbine (WT1), which is in idle mode, is saved as first rotor angle (RA1),
- wherein the first rotor angle (RA1) is communicated to the at least second wind turbine (WT2) of the wind farm (WF), which is in idle mode,
- wherein the rotor angle (RA1) of the second wind turbine (WT2) is adjusted to the first rotor angle (RA1), and is kept by the second wind turbine (WT2), which is in idle mode.

2. Method according to claim 1, wherein the wind speed (WS) of the incoming wind is measured at the site of the first wind turbine (WT1).

3. Method according to claim 2,
- wherein the wind speed is measured by a meteorological instrument, which is arranged at the top of the nacelle (NA1) of the first wind turbine (WT1), or
- wherein the wind speed is measured by a meteorological instrument, which is arranged at a meteorological mast, while the mast is arranged close to the site of the first wind turbine (WT1) or while the mast is arranged close to the site of the wind farm (WF).

4. Method according to claim 1, wherein the first rotor angle (RA1) is saved by a wind park server (PS).

5. Method according to claim 4, wherein the wind park server at least communicates the first rotor angle (RA1) to the second wind turbine (WT2).

6. Method according to claim 1, wherein the first rotor angle (RA1) is saved at the first wind turbine (WT1) and is at least communicated from the first wind turbine (WT1) to the second wind turbine (WT2).

7. Method according to claim 1,
- wherein the pitch angle of the blades of the first wind turbine (WT1) is saved as first pitch angle, when the first wind turbine (WT1) is turned from operational mode into idle mode,
- wherein the first pitch angle is at least communicated to the second wind turbine (WT2),
- wherein the pitch angle of the blades of the second wind turbine (WT2) is adjusted to this first pitch angel when the second wind turbine (WT2) is in idle mode.

8. Method according to claim 1,
- wherein the yaw angle of the nacelle of the first wind turbine (WT1) is saved as first yaw angle, when the first wind turbine (WT1) is turned from operational mode into idle mode,
- wherein the first yaw angle is at least communicated to the second wind turbine,
- wherein the yaw angle of the second wind turbine is adjusted to this first yaw angel when the second wind turbine is in idle mode.

9. Method according to claim 1, wherein the method-steps are initiated if the measured wind speed is beneath the predefined wind speed for a given period of time.
